(19) Europäisches Patentamt
European Patent Office
Office européen des brevets

(11) Publication number: 0 314 438 A2

(12) # EUROPEAN PATENT APPLICATION

(21) Application number: 88310032.3

(22) Date of filing: 25.10.88

(51) Int. Cl.4: C 07 F 9/165
A 01 N 57/12

(30) Priority: 30.10.87 JP 276830/87
11.03.88 JP 58599/88

(43) Date of publication of application:
03.05.89 Bulletin 89/18

(84) Designated Contracting States:
CH DE FR GB IT LI NL

(71) Applicant: SUMITOMO CHEMICAL COMPANY, LIMITED
15 Kitahama 5-chome Higashi-ku
Osaka-shi Osaka 541 (JP)

(72) Inventor: Itoh, Yoshikazu
8-4, Oda-2-chome
Ibaraki-shi (JP)

Hatakoshi, Makoto
10-2-253, Sonehigashinocho-2-chome
Toyonaka-shi (JP)

Sasaki, Mitsuru
10-5-305, Sonehigashinocho-2-chome
Toyonaka-shi (JP)

Ogawa, Masao
11-8-303, Sonehigashinocho-2-chome
Toyonaka-shi (JP)

(74) Representative: Cresswell, Thomas Anthony et al
J.A. Kemp & Co. 14 South Square Gray's Inn
London WC1R 5EU (GB)

(54) **A thiophosphoric acid ester as a soil pest controlling agent.**

(57) The present invention discloses a thiophosphoric acid ester useful to control pests living in soil and a process for producing said ester. Said ester has excellent activity in controlling pests living in soil such as southern corn rootworm, cupreous chafer, etc.

The present invention discloses also a method for stabilizing said ester by adding at least one compound selected from the group consisting of polyols, polyalkylene glycols and their esters and ethers.

According to the present invention, there is provided a highly active and stable soil pest controlling agent and agricultural composition.

EP 0 314 438 A2

## Description

# A THIOPHOSPHORIC ACID ESTER AS A SOIL PEST CONTROLLING AGENT

The present invention relates to a thiophosphoric acid ester, a process for producing the same, soil pest controlling agents containing the same as an active ingredient, a method for stabilizing the same and stabilized agricultural compositions containing the same as an active ingredient.

Hitherto, compounds having a closely related structure with the compound of the present invention have been disclosed in US Patent Nos. 3,760,041, 4,443,439 and 4,473,562, for example.

However, one can hardly say that the compounds described in the foregoing patents are satisfactory as an active ingredient for insecticides, particularly for soil pest controlling agents.

The present inventors have extensively studied to develop an effective controlling agent against the so-called soil pests living in soil and greatly damaging crops. As a result, they have found that O,O-diethyl O-1-(N-methoxyimino)propyl thiophosphate having the formula (I) (hereinafter referred to as the present compound),

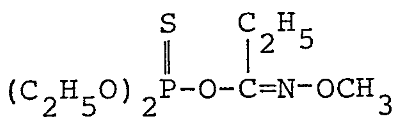

(I)

has an excellent efficacy.

The present compound is included in the scope encompassed by the general formula described in US Patent No. 4,473,562, but it contains neither exemplary disclosure nor suggestion on the present compound, and no description of test examples on soil pests either. The present inventors, however, confirmed that the present compound, as demonstrated later in the test examples, has an unexpectedly higher insecticidal activity against soil pests than do the known compounds having a closely related structure. The present inventors have thus attained to the present invention.

The present compound is produced, for example, by the process described below: O,O-diethyl thiophosphoric acid chloride having the formula (II),

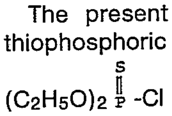

(II)

is treated with N-methoxypropanamide having the formula (III),

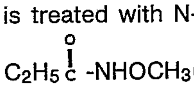

(III)

in a solvent in the presence of a base.

This process is usually carried out in the following reaction conditions.

In the reaction, N-methoxypropanamide (III) is used in an amount of from 1 to 2 equivalents based on 1 equivalent of O,O-diethyl thiophosphoric acid chloride (II), and the base is used in an amount of from 1 to 2 equivalents based on the same.

The base includes for example inorganic bases (e.g. sodium hydride, potassium hydride, sodium hydroxide, potassium hydroxide, sodium carbonate, potassium carbonate), organic bases (e.g. pyridine, triethylamine), etc.

The reaction temperature and reaction time depend on the solvent used, but generally, they are from 0° to 100°C and from 30 minutes to 24 hours, respectively.

The solvent includes for example aromatic hydrocarbons (e.g. toluene, benzene), ketones (e.g. methyl isobutyl ketone, methyl ethyl ketone, acetone), ethers (e.g. diethyl ether, tetrahydrofuran), acetonitrile, water and admixtures thereof.

After completion of the reaction, the desired present compound is obtained by the usual after-treatments such as extraction with organic solvents, etc. Also, the compound may be purified by column chromatography, etc. if necessary.

The present compound exhibits excellent efficacy against various soil pests, for example, pests of Diabrotica genus such as western corn rootworm (Diabrotica virgifera Le Conte), northern corn rootworm (Diabrotica longicornis Say), southern corn rootworm (Diabrotica undecimpunctata howardi Barber), etc.; pests of Anomala genus such as cupreous chafer (Anomala cuprea Hope), soybean beetle (Anomala rufocuprea Motschulsky), cherry chafer (Anomala daimiana Harlod), striated chafer (Anomala testaceips Motschulsky), etc.; pests of Popillia genus such as Japanese beetle (Popillia japonica Newman), etc.; pests of Aulacophora genus such as cucurbit leaf beetle (Aulacophora femoralis Motschulsky), etc.; pests of Phyllotreta genus such as stripped cabbage flea beetle (Phyllotreta vittata Fabricius), etc.; pests of Melanotus genus such as sweet potato wireworm (Melanotus caudex Lewis), etc.; pests of Agriotes genus such as

barley wireworm (Agriotes fuscicollis Miwa), etc.; pests of Delia genus such as onion maggot (Delia antiqua Meigen), turnip maggot (Delia floralis Fallén), seed-corn maggot (Delia platura Meigen), etc.; pests of Gryllotalpa genus such as African mole cricket (Gryllotalpa africana Palisot de Beauvois), etc.; pests of Lissorhoptrus genus such as rice water weevil (Lissorhoptrus oryzophilus Kuschel), etc.; pests of Pratylenchus genus such as Cobb root-lesion nematode (Pratylenchus penetrans Cobb), walnut root-lesion nematode (Pratylenchus vulnus Allen et Jensen), coffee root-lesion nematode (Pratylenchus coffeae Zimmermann), etc.; pests of Heterodera genus such as soybean cyst nematode (Heterodera glycines Ichinohe), etc.; pests of Meloidogyne genus such as northern root-knot nematode (Meloidogyne hapla Chitwood), cotton root-knot nematode (Meloidogyne incognita var. acrita Chitwood), Javanese root-knot nematode (Meloidogyne javanica Treub), peanut root-knot nematode (Meloidogyne arenaria Neal), etc.; pests of Aphelenchoides genus such as rice white-tip nematode (Aphelenchoides besseyi Christie) and the like.

When the present compound is used as an active ingredient for soil pest controlling agents, it is usually formulated before use into oil sprays, emulsifiable concentrates, wettable powders, granules, dusts, aerosols, etc. by mixing with solid carriers, liquid carriers or gaseous carriers, and if necessary, adding surface active agents and/or other auxiliaries for formulation.

It is suitable that these preparations contain the present compound as an active ingredient in an amount of from 0.1 to 99.9% by weight, preferably from 1 to 80% by weight.

However, the present compound sometimes decomposes depending upon the conditions of storage or formulation. The present inventors, therefore, have made an extensive study to establish a method for stabilizing the thiophosphoric acid ester having the formula (I) and obtain stabilized agricultural compositions containing said ester as an active ingredient. As a result, they have confirmed that this object can be attained by using as a stabilizing agent one or more compounds selected from the group consisting of polyols, polyalkylene glycols and their esters and ethers.

Thus, according to the present invention, there are provided a method for stabilizing said ester which method comprises adding to the present compound one or more of the foregoing stabilizing agents and stabilized agricultural compositions obtained by incorporating one or more of the foregoing stabilizing agents in the solid preparations which comprises the present compound as an active ingredient.

As examples of the polyols and polyalkylene glycols used in the stabilization method of the present invention, there are mentioned glycerin, polyglycerin, ethylene glycol (molecular weight: 62), polyethylene glycol having an average molecular weight of not less than 62, propylene glycol (molecular weight: 76), polypropylene glycol having an average molecular weight of not less than 76, polybutylene glycol, polyoxyethylene/oxypropylene glycol, polyoxyethylene/oxybutylene glycol, polyoxyethylene/oxypropylene/oxybutylene glycol, etc. In addition, as examples of the polyol esters or ethers and polyalkylene glycol esters or ethers, there are mentioned polyoxyethylene alkyl ester, polyoxyethylene alkyl ether, polyoxyethylene alkylphenol ether, polyoxyethylene sorbitan alkyl ether, their derivatives (e.g. polyoxyethylene alkylphenol ether sodium sulfate, polyoxyethylene sorbitan alkyl ether ammonium sulfate), adducts of sulfuric acid ester series anionic surface active agents with polyoxyalkylene, adducts of sulfonic acid series anionic surface active agents with polyoxyalkylene, etc. However, the polyols, polyalkylene glycols and their esters or ethers which are useful in the stabilization method are not of course limited to those described above. Of these compounds, those which are liquid at room temperature and have a low viscosity are favorable for the purpose of the present invention. Also, propylene glycol, polypropylene glycol, ethylene glycol, polyethylene glycol, glycerin, polyoxyethylene/oxypropylene glycol and polyoxyethylene sorbitan alkyl ether are preferred in various respects.

The stabilization method of the present invention is usually realized by adding from 10 to 300 parts by weight of at least one foregoing stabilizing agent such as polyols, polyalkylene glycols, etc. to 100 parts by weight of the present compound.

The agricultural composition of the present invention contains from 0.1 to 40 parts by weight of the present compound as an active ingredient, from 0.1 to 30 parts by weight, preferably from 1 to 20 parts by weight of the foregoing polyols, polyalkylene glycols, etc. as a stabilizing agent and a solid carrier as the rest. However, various surface active agents and auxiliaries for formulation (e.g. machine oils, liquid paraffin, animal or vegetable oils) may be used together if necessary.

The solid carrier includes for example fine powders or granules of clays (e.g. kaolin clay, diatomite, synthetic hydrated silicon dioxide, bentonite, montmorillonite, terra alba), talcs, other inorganic minerals (e.g. attapulgite clay, sericite, quartz, sulfur, activated carbon, calcium carbonate, hydrated silica, pumice, zeolite), chemical fertilizers (e.g. ammonium sulfate, ammonium phosphate, ammonium nitrate, urea, ammonium chloride), etc. Of these carriers, oil-absorbing granular mineral carriers such as attapulgite clay, diatomite, bentonite, montmorillonite, pumice, zeolite, etc. are so easy to make formulations that they fit the economical production of impregnation-type granules.

The liquid carrier includes for example water, alcohols (e.g. methanol, ethanol), ketones (e.g. acetone, methyl ethyl ketone), aromatic hydrocarbons (e.g. benzene, toluene, xylene, ethylbenzene, methylnaphthalene), aliphatic hydrocarbons (e.g. hexane, cyclohexane, kerosene), esters (e.g. ethyl acetate, butyl acetate), nitriles (e.g. acetonitrile, isobutyronitrile), ethers (e.g. diisopropyl ether, dioxane), acid amides (e.g. dimethylformamide, dimethylacetamide), halogenated hydrocarbons (e.g. dichloroethane, trichloroethylene, carbon tetrachloride), etc.

The gaseous carrier, i.e. a propellant includes for example a freon gas, butane gas, carbon dioxide gas, etc.

The surface active agent includes for example alkyl sulfates, alkylsulfonates, alkylarylsulfonates, alkyl aryl ethers, polyhydric alcohol esters, sugar alcohol derivatives, etc.

The auxiliary for formulation such as fixing agents, dispersing agents, etc. includes for example casein, gelatin, polysaccharides (e.g. starch powder, gum arabic, cellulose derivatives, alginic acid), lignin derivatives, bentonite, saccharides, synthetic water-soluble high polymers (e.g. polyvinyl alcohol, polyvinyl pyrrolidone, polyacrylic acids), etc. The stabilizing agent includes PAP (isopropyl acid phosphate), BHT (2,6-di-tert-butyl-4-methylphenol), BHA (a mixture of 2-tert-butyl-4-methoxyphenol and 3-tert-butyl-4-methoxyphenol, vegetable oils, mineral oils, surface active agents, fatty acids and their esters, etc.

The formulation thus obtained are applied to soil surface as they are or diluted with water or the like. If necessary, they are mixed with soil after they have been applied to the soil surface, or they are drenched into soil. They can also be applied to foliage. Further, they may be used mixed with other insecticides, nematocides, acaricides, fungicides, herbicides, plant growth regulators, fertilizers or soil improvers, or may be used simultaneously with these chemicals without mixing.

When the present compound is used incorporated into soil pest controlling agents as an active ingredient, the application amount of the present compound is usually from 10 to 1000 g per 10 ares, preferably from 50 to 500 g per 10 ares. When the emulsifiable concentrates, wettable powders, etc. are used diluted with water, the application concentration of the active ingredient is from 0.01 to 30%, and the dusts, granules, oil sprays, aerosols, etc. are used as they are without being diluted.

Any of these application amount and concentration depends on the type of formulations, when, where and how these formulations are applied, the kind of pests, the degree of damage, etc., and it may be increased or decreased independently of the foregoing ranges.

The following production examples, formulation examples and test examples serve to give specific illustrations of the practice of the present invention but they are not intended to limit the scope of the present invention.

First, production examples for the present compound are shown below.

Production example 1

1.59 Grams of 60% sodium hydride were suspended in 100 ml of tetrahydrofuran, and 4.1 g of N-methoxypropanamide were added by drops with stirring at room temperature. After completion of the addition, stirring was continued for further 1 hour, and 5.0 g of O,O-diethyl thiophosphoric acid chloride were added thereto by drops at room temperature. After completion of the addition, the mixture was heated under reflux for 3 hours. After the reaction had been completed, tetrahydrofuran was removed from the reaction mixture by evaporation, then 50 ml of methylene chloride and 50 ml of water were added to the resulting mixture to separate it into layers. The organic layer was washed with water and dried over anhydrous magnesium sulfate, and the solvent was removed therefrom under reduced pressure, followed by purification with silica gel column chromatography to obtain 4.59 g of O,O-diethyl O-1-(N-methoxyimino)propyl thiophosphate, the present compound.

Refractive index : $n_D^{23.2}$ 1.4602

Production example 2

4.31 Grams of potassium carbonate were suspended in 30 ml of methyl isobutyl ketone. With stirring at room temperature, 3.38 g of N-methoxypropanamide were added thereto by drops. After completion of the addition, stirring was continued for further 2 hours. Thereto were added 5.89 g of O,O-diethyl thiophosphoric acid chloride by drops at room temperature.

After completion of the addition, the reaction mixture was heated under reflux for 2 hours. After the reaction had been completed, 50 ml of methylene chloride and 50 ml of water were added thereto to separate it into layers. The organic layer was washed with water and dried over anhydrous magnesium sulfate, and the solvent was removed therefrom under reduced pressure, followed by purification with silica gel column chromatography to obtain 3.38 g of the present compound.

Next, formulation examples are shown below: In the examples, parts are by weight.

Formulation example 1 Emulsifiable concentrate

Forty parts of the present compound are dissolved in 50 parts of xylene, and 10 parts of an emulsifier, Sorpol SM-200 (a registered trade mark of Toho Chemical Industries Co., Ltd.; a mixture of polyoxyethylene alkylaryl ether, etc. and dodecylbenzenesulfonic acid), are added thereto. The resulting mixture is well stirred and mixed to obtain an emulsifiable concentrate having an active ingredient concentration of 40%.

Formulation example 2 Wettable powder

Five parts of the foregoing emulsifier, Sorpol SM-200, are added to 40 parts of the present compound, and the mixture is well mixed. Thereafter, 20 parts of Carplex #80 (a registered trademark of Shionogi & Co., Ltd.; fine powders of synthetic hydrated silicon dioxide) and 35 parts of 300-mesh diatomite are added thereto. Then the resulting mixture is stirred and mixed on a juice mixer to obtain a wettable powder having an active ingredient concentration of 40%.

Formulation example 3 Granule

To 5 parts of the present compound are added 5 parts of Toyolignin CT (a registered trademark of Toyobo; lignin sulfonate) and 90 parts of GSM Clay (a registered trademark of Zieklite Mining Co., Ltd.; quartz powder). The resulting mixture is well stirred and mixed on a mixer. Subsequently, water is added to the mixture in an amount of 10% relative to the total amount of the mixture. The mixture is then further stirred, granulated on a granulator and air-dried to obtain a granule having an active ingredient concentration of 5%.

Formulation example 4 Dust

Five parts of the present compound are dissolved in 20 parts of acetone. To the resulting solution are added 3 parts of the foregoing Carplex #80, 0.3 part of PAP and 91.7 parts of 300-mesh talc. The mixture is stirred and mixed on a juice mixer. Removing acetone from the mixture by evaporation gives a dust having an active ingredient concentration of 5%.

Formulation example 5 Oil spray

Twenty parts of the present compound are dissolved in 80 parts of kerosene to obtain an oil spray having an active ingredient concentration of 20%.

Formulation example 6 Granule

Three parts of the present compound are admixed with 6 parts of each of propylene glycol, dipropylene glycol, polypropylene glycol (average molecular weight: 2000), polypropylene glycol (average molecular weight: 4000), glycerin, polyoxyethylene sorbitan monolaurate (number of added moles: 20), polyethylene glycol (average molecular weight: 300) and polyoxyethylene/oxypropylene glycol (average molecular weight: 2500, the ethylene oxide content in all the molecules: 20 wt.%). Thereafter, 91 parts of granular bentonite (a carrier produced by Hojun Mining Co., Ltd.; 14 to 42 mesh) are admixed with each of the resulting mixtures. Then each mixture thus obtained was impregnated into the carrier, whereby granules containing 3% of the active ingredient are obtained.

Formulation example 7 Granule

Three parts of the present compound are admixed with each of 3 parts and 9 parts of polypropylene glycol (average molecular weight: 2000). Thereafter, the granular bentonite of Formulation example 6 is admixed therewith so as to make the whole 100 parts. Then, each mixture thus obtained was impregnated into the carrier, whereby granules containing 3% of the active ingredient are obtained.

Formulation example 8 Granule

Three parts of the present compound are admixed with 6 parts of each of polypropylene glycol (average molecular weight: 2000) and polyethylene glycol (average molecular weight: 300). Thereafter, 91 parts of Aplus® (a carrier produced by Isolite Kogyo Co., Ltd.; granulated and calcined quartz; 20 to 40 mesh) is admixed with each mixture. Then, each of the resulting mixtures was impregnated into the carrier, whereby granules containing 3% of the active ingredient are obtained.

Formulation example 9 Granule

Three parts of the present compound is admixed with 3 parts of polyethylene glycol (average molecular weight: 300). Thereafter, 94 parts of Ishikawa Lite Pesticide No. 2® (a carrier produced by Ishikawa Lite Kogyo Co., Ltd.; pumice) are admixed with the mixture to impregnate the resulting mixture into the carrier, whereby a granule containing 3% of the active ingredient is obtained.

Formulation example 10 Granule

To 7.5 parts of the present compound are added 10 parts of polyethylene glycol (average molecular weight: 300). Thereafter, 82.5 parts of montmorillonite clay [a carrier produced by Lowe's Co., (Oran MO); 24 to 48 mesh] are admixed with the resulting mixture. Then, each mixture thus obtained was impregnated into the carrier, whereby a granule containing 7.5% of the active ingredient is obtained.

Formulation example 11 Granule

To 7.5 parts of the present compound are added 8 parts of each of propylene glycol, polypropylene glycol (average molecular weight: 2000) and polyethylene glycol (average molecular weight: 300). Thereafter, 84.5 parts of the granular bentonite of Formulation example 6 are admixed with each mixture. Then, each of the resulting mixture was impregnated into the carrier, whereby granules containing 7.5% of the active ingredient are obtained.

Formulation example 12 Dust

To a mixture of 1 part of the present compound, 3 parts of white carbon and 94 parts of kaolin clay are added 2 parts of each of polyethylene glycol (average molecular weight: 300) and polypropylene glycol (average molecular weight: 2000). Every mixture is uniformly mixed on a mixer to obtain a dust containing 1% of the active ingredient.

Formulation example 13 Wettable powder

To a mixture of 10 parts of the present compound, 2 parts of Sorpol® 2495 G (an emulsifier produced by Toho Chemical Industries Co., Ltd.), 2 parts of San X® P-201 (a dispersing agent produced by Sanyo-Kokusaku Pulp Co.. Ltd.), 20 parts of white carbon and 56 parts of diatomite is added 10 parts of each of polyethylene glycol (average molecular weight: 300) and polypropylene glycol (average molecular weight: 2000). Every mixture is uniformly mixed on a mixer to obtain a wettable powder containing 10% of the active ingredient.

Comparative example 1

Three parts of the present compound are admixed with 97 parts of the granular bentonite of Formulation example 6 to impregnate the present compound into the carrier, whereby a granule containing 3% of the active ingredient is obtained.

Comparative example 2

Three parts of the present compound are admixed with 97 parts of Aplus® of Formulation example 8 to impregnate the present compound into the carrier, whereby a granule containing 3% of the active ingredient is obtained.

Comparative example 3

Three parts of the present compound are admixed with 97 parts of Ishikawa Lite Pesticide No. 2® of Formulation example 9 to impregnate the present compound into the carrier, whereby a granule containing 3% of the active ingredient is obtained.

Comparative example 4

To 7.5 parts of the present compound are added 92.5 parts of the montmorillonite clay of Formulation example 10 to impregnate the present compound into the carrier, whereby a granule containing 7.5% of the active ingredient is obtained.

Comparative example 5

To 7.5 parts of the present compound are added 92.5 parts of the granular bentonite of Formulation example 6 to impregnate the present compound into the carrier, whereby a granule containing 7.5% of the active ingredient is obtained.

Test example 1

The mixtures comprising 50 parts of the present compound and 50 parts of each of polyethylene glycol(average molecular weight: 300) and polypropylene glycol (average molecular weight: 2000) were put into glass bottle and then subjected to the heat-storage test. The mixture comprising 50 parts of the present compound and no stabilizing agent and the mixtures comprising 50 parts of the present compound and 50 parts of each of toluene, heptane and acetone were also subjected to the same test as a control. The test gave the percent decomposition of the active ingredient.

Tables 1 and 2 show the results.

Table 1

| Stabilizing agent | Percent decomposition (%) (after storage at 40°C for 7 days) |
|---|---|
| Polypropylene glycol (average molecular weight: 2000) | 0 |
| Polyethylene glycol (average molecular weight: 300) | 7.1 |
| None | 29.3 |

Table 2

| | Percent decomposition (%) (after storage at 40°C for 6 days) |
|---|---|
| Toluene | 20.6 |
| Heptane | 15.6 |
| Acetone | 23.5 |

Test example 2

The heat-storage test was carried out on the compositions obtained in Formulation examples 6 and 7 and Comparative example 1 to measure the percent decomposition of the active ingredient.

Table 3 shows the results.

Table 3

| Stabilizing agent | Dosage rate (%) | Percent decomposition (%) (after storage at 40°C for 30 days) |
|---|---|---|
| Propylene glycol | 6 | 1.2 |
| Dipropylene glycol | 6 | 4.5 |
| Polypropylene glycol (average molecular weight: 2000) | 3 | 8.9 |
| | 6 | 2.7 |
| | 9 | 7.1 |
| Polypropylene glycol (average molecular weight: 4000) | 6 | 1.5 |
| Glycerin | 6 | 3.2 |
| Polyoxyethylene sorbitan monolaurate (20 moles of oxyethylene added) | 6 | 0.6 |
| Polyethylene glycol (average molecular weight: 300) | 6 | 2.7 |
| Polyoxyethylene/oxypropylene glycol (average molecular weight: 2500, ethylene oxide content in all the molecules: 20 wt.%) | 6 | 4.7 |
| None | - | 97.9 |

Test example 3

The heat-storage test was carried out on the compositions obtained in Formulation example 8 and Comparative example 2 to measure the percent decomposition of the active ingredient.

Table 4 shows the results.

Table 4

| Stabilizing agent | Percent decomposition (%) (after storage at 40°C for 30 days) |
|---|---|
| Polypropylene glycol (average molecular weight: 2000) | 3.3 |
| Polyethylene glycol (average molecular weight: 300) | 0 |
| None | 27.6 |

Test example 4

The heat-storage test was carried out on the compositions obtained in Formulation example 9 and Comparative example 3 to measure the percent decomposition of the active ingredient.

Table 5 shows the results.

Table 5

| Stabilizing agent | Percent decomposition (%) (after storage at 40°C for 30 days) |
|---|---|
| Polyethylene glycol (average molecular weight: 300) | 3.0 |
| None | 95.2 |

Test example 5

The heat-storage test was carried out on the compositions obtained in Formulation example 10 and Comparative example 4 to measure the percent decomposition of the active ingredient.

Table 6 shows the results.

Table 6

| Stabilizing agent | Percent decomposition (%) (after storage at 40°C for 30 days) |
|---|---|
| Polyethylene glycol (average molecular weight: 300) | 8.9 |
| None | 99.2 |

Test example 6

The heat-storage test was carried out on the compositions obtained in Formulation example 11 and Comparative example 5 to measure the percent decomposition of the active ingredient.

Table 7 shows the results.

Table 7

| Stabilizing agent | Percent decomposition (%) (after storage at 40°C for 30 days) |
|---|---|
| Polypropylene glycol (average molecular weight: 2000) | 9.3 |
| Polyethylene glycol (average molecular weight: 300) | 6.0 |
| Propylene glycol | 4.3 |
| None | 94.2 |

Next, the usefulness of the present compound as an active ingredient for soil pest controlling agents is demonstrated with reference to the following test examples. In the examples, compounds used as a control are shown by Compound symbols in Table 8.

Table 8

| Compound symbol | Structural formula | Remark |
|---|---|---|
| (A) | 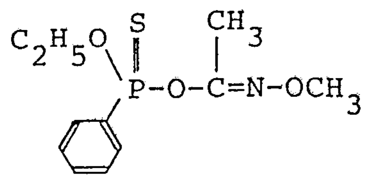 | Compound described in US Patent No. 4,443,439 |
| (B) | 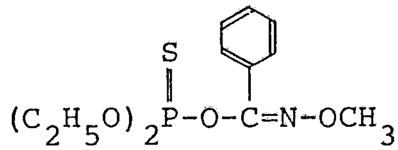 | Compound described in US Patent No. 3,760,041 |
| (C) | 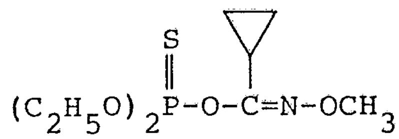 | Compound described in US Patent No. 4,473,562 |
| (D) | 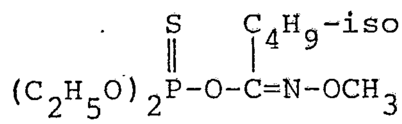 | Same as above |
| (E) | 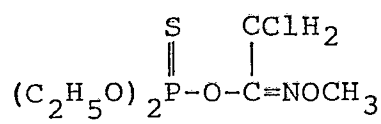 | Compound described in JP-A-52-33627 |

Test example 7

Five milliliters of aqueous diluted solution of each of the emulsifiable concentrates obtained according to Formulation example 1 was mixed with 50 g of soil to give a soil samples having an active ingredient content in the soil of 0.5 or 0.25 ppm.

Each of these soil samples was filled in polyethylene cup of 5.6 cm in diameter and 5.8 cm in height. In each cup, two corn grains having roots 2 to 3 cm long were planted and 10 third-instar larvae of southern corn rootworm (Diabrotica undecimpunctata howardi BARBER) were released. After two days, the number of the dead and alive larvae were counted for mortality (%). This test was repeated three times. Table 9 shows the results.

Table 9

| Test compound | Mortality (%) | |
|---|---|---|
| | 0.5 ppm | 0.25 ppm |
| Present compound | 100 | 100 |
| (A) | 87 | 0 |
| (B) | 0 | - |
| (C) | 0 | - |
| (D) | 0 | - |
| (E) | 44 | 0 |

Test example 8

Twenty milliliters of aqueous diluted solution of each of the emulsifiable concentrates obtained according to Formulation example 1 was mixed with 250-g soil/250-g sand mixture to give soil·sand mixture samples having an active ingredient content in the sample of 0.5 or 0.25 ppm. Each of these soil·sand mixture samples was filled in a polyethylene cup of 9 cm in diameter and 8 cm in height. Thereafter, 4 third-instar larvae of cupreous chafer (Anomala cuprea Hope) were released in each cup together with carrot disks (diameter, 3 cm; thickness, 5 mm). After 7 days, the number of the dead and alive larvae were counted for mortality (%) and percentage of moribund insects (%). This test was repeated twice. Table 10 shows the results. The percentage of dead insects plus moribund insects is shown in parenthesis.

Table 10

| Test compound | Mortality (%) [percentage of moribund insects (%)] | |
|---|---|---|
| | 0.5 ppm | 0.25 ppm |
| Present compound | 100 | 100 |
| (A) | 0 | - |
| (C) | 0 [100] | 25 |

Test example 9

Three parts of the present compound were admixed with 6 parts of polypropylene glycol (average molecular weight: 200). Then, the granular bentonite of Formulation example 6 was admixed therewith so as to make the whole 100 parts to impregnate the present compound into the carrier, whereby a granule containing 3% of the active ingredient was obtained. Thereafter, mixing this granule with 300 g of soil (16 mesh) gave a soil sample containing 2.5 ppm of the active ingredient. This soil sample was filled in a polyethylene cup of 9 cm in diameter

and 8 cm in height and allowed to stand in a greenhouse. Three days after the treatment, 50 g of this soil sample were taken and filled in a polyethylene cup of 5.6 cm in diameter and 5.8 cm in height. Then, two corn grains having roots 2 to 3 cm long were planted and 10 third-instar larvae of southern corn rootworm (Diabrotica undecimpunctata howardi BARBER) of Test example 7 were released therein. Two days later, the dead and alive larvae were counted for mortality (%). This test was repeated three times. Table 11 shows the result.

Table 11

| Test compound | Mortality (%) |
|---|---|
| 3% Granule of the present compound | 100 |

Test example 10

With 7.5 parts of the present compound were admixed 8 parts of polypropylene glycol (average molecular weight: 200). Then, the granular bentonite (described above) was admixed therewith in a sufficient amount to make the whole 100 parts to impregnate the present compound into the carrier, whereby a granule containing 7.5% of the active ingredient was obtained. In the same manner as in Test example 9, the soil sample containing 2.5 ppm of the active ingredient was prepared and the activity against the southern corn rootworm (Diabrotica undecimpunctata howardi BARBER) of Test example 7 was examined. Table 12 shows the result.

Table 12

| Test compound | Mortality(%) |
|---|---|
| 7.5% Granules of the present compound | 100 |

**Claims**

1. O,O-diethyl O-1-(N-methoxyimino)propyl thiophosphate having the formula,

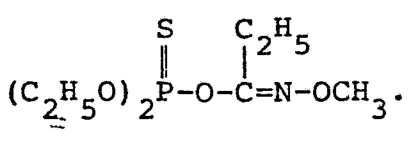

2. A process for producing O,O-diethyl O-1-(N-methoxyimino)propyl thiophosphate which comprises treating O,O-diethyl thiophosphoric acid chloride having the formula,

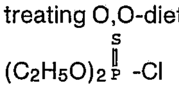

with N-methoxypropanamide having the formula,

$$C_2H_5\overset{\overset{O}{\|}}{C}\text{-}NHOCH_3$$

in the presence of a base.

3. A soil pest controlling agent containing O,O-diethyl O-1-(N-methoxyimino)propyl thiophosphate as an active ingredient.

4. A method of stabilising O,O-diethyl O-1-(N-methoxyimino)propyl thiophosphate which comprises admixing one or more compounds selected from polyols, poly-alkylene glycols and their esters and ethers with O,O-diethyl O-1-(N-methoxyimino)propyl thiophosphate.

5. A stabilised agricultural composition which is obtainable by incorporating at least one compound selected from polyols, polyalkylene glycols and their esters and ethers into a solid preparation comprising O,O-diethyl O-1-(N-methoxyimino)propyl thiophosphate as an active ingredient.

6. A stabilised agricultural composition according to claim 5 comprising at least one oil-absorbing granular mineral carrier in the solid preparations.

7. Use of O,O-diethyl O-1-(N-methoxyimino) propyl thiophosphate, or a composition thereof as defined in claim 5 or claim 6, as a pest control agent.

8. A method for controlling soil pests comprising treating soil with O,O-diethyl O-1-(N-methoxyimino)propyl thiophosphate, or a composition thereof as defined in claim 5 or claim 6.